# EUROPÄISCHE PATENTANMELDUNG

(11) **EP 1 122 666 A2**
(43) Veröffentlichungstag der Anmeldung: **08.08.2001**
(21) Anmeldenummer: 01104906.1
(22) Anmeldetag: 28.02.2001
(51) Int. Cl.: G06F 17/60

(54) **Vorrichtung und Verfahren zur computergestützten Bearbeitung von Bestellinformationen**

(30) Priorität: 29.02.2000 DE 10009558; 03.07.2000 DE 10032211
(71) Anmelder: beamgate mobile commerce AG, 82054 Sauerlach (DE)
(72) Erfinder: Henkies, Frank, 82152 Planegg (DE); Albrecht, Miguel, Dr., 81737 München (DE)
(74) Vertreter: Joppich, Martin, Dr.-Ing.

(57) **Zusammenfassung**

Die Erfindung betrifft eine Vorrichtung zur computergestützten Bearbeitung von Bestellinformationen. Um eine einfache und möglichst universelle Bestellung von Produkten zu ermöglichen, ist eine Versand-Datenbank vorgesehen, auf der Angebotsdaten gespeichert sind und/oder auf die Angebotsdaten über eine Kommunikationsverbindung übertragbar sind, und auf der Benutzerdaten gespeichert sind. Eine erste Schnittstelle dient zur benutzerseitigen Einspeisung einer Bestellinformation in die Datenbank, wobei die Bestellinformation eine Benutzerkennung und eine Anfragekennung umfasst, die von einer Auswerteeinheit zur weiteren Verarbeitung auswertbar sind. Mittels einer zweiten Schnittstelle ist in Abhängigkeit von der Auswertung der Auswerteeinheit eine Angebotsinformation an ein benutzerseitiges Endgerät übertragbar.

## Beschreibung

Die Erfindung betrifft eine Vorrichtung und ein Verfahren zur computergestützten Bearbeitung von Bestellinformationen. Bestellinformationen im Sinne der Erfindung sind alle Informationen, die seitens eines Benutzers zur Bestellung bestimmter Produkte oder Dienstleistungen elektronisch übertragbar sind.

Es ist bereits bekannt, Produkte insbesondere über Internet-Lösungen computergestützt zu bestellen. Hierbei stellt ein Provider eine Versand-Datenbank zur Verfügung, auf der produktspezifische Daten gespeichert sind. Ein Benutzer kann über das Internet auf diese Versand-Datenbank zugreifen und nach Durchsicht der Produktinformationen das für ihn geeignete Produkt bestellen. Diese Bestellinformation wird von der Versand-Datenbank in der Regel an den jeweiligen Anbieter weitergeleitet, der sodann das Produkt an den Benutzer liefert.

Ein Nachteil dieser Verfahren besteht darin, dass für den Benutzer in der Regel aufwendige technische Voraussetzungen notwendig sind, um eine computergestützte Bestellung durchführen zu können. Demnach benötigt der Benutzer zumindest einen Computer mit einem entsprechenden Internet-Anschluss sowie das allgemeine Wissen darüber, wie auf das Internet zuzugreifen ist und unter welchen Internet-Adressen sich Versand-Datenbanken befinden.

Es sind auch bereits Lösungen bekannt geworden, die eine computergestützte Bestellung über eine Mobilfunkverbindung abwickeln. Aus der Wirtschaftswoche Nr. 9 vom 24.02.2000 auf Seite 131 ist ein Verfahren bekannt, bei dem eine computergestützte Bestellung von CDs über eine Mobilfunkverbindung durchgeführt wird. Die Bestellung orientiert sich dabei an einem Musiktitel, der gerade in einem Musiksender abgespielt wird, so dass zur Bestellung nur die Übermittlung des jeweiligen Kürzels des Radiosenders notwendig ist. Dieses Verfahren hat allerdings den Nachteil, dass es auf eine ganz enge Produktgattung spezialisiert ist und zusätzlich eine aufwendige Registrierungsprozedur bedingt, mit der sich der Benutzer bei der jeweiligen Versand-Datenbank registrieren kann.

Aufgabe der Erfindung ist es daher, eine Vorrichtung und ein Verfahren zur computergestützten Bearbeitung von Bestellinformationen derart bereitzustellen, dass ein möglichst breites Benutzer- und Produktsprektrum angesprochen werden kann.

Diese Aufgabe wird durch die Merkmale der Patentansprüche 1 und 17 gelöst. Die erfindungsgemäße Lösung beruht auf der Erkenntnis, seitens der Versand-Datenbank zwei Schnittstellen zur Verfügung zu stellen, nämlich eine erste Schnittstelle zur benutzerseitigen Einspeisung einer Bestellinformation in die Datenbank und eine zweite Schnittstelle, über die eine Angebotsinformation an ein benutzerseitiges Endgerät übertragbar ist. Die erste Schnittstelle ist vorzugsweise unidirektional ausgebildet, so dass eine Bestellinformation seitens des Benutzers mit einfachsten Mitteln auf die Versand-Datenbank übertragbar ist. Da zur Ermittlung der Angebotsinformation eine zweite Schnittstelle zur Verfügung steht, muss der Benutzer zum Zeitpunkt der Abgabe der Bestellinformation über keine aufwendigen technischen Hilfsmittel verfügen. Vielmehr kann die Angebotsinformation an ein getrenntes Endgerät übermittelt werden, um dann zu einem späteren Zeitpunkt von dem Benutzer gesichtet werden zu können. Vorzugsweise ist die zweite Schnittstelle derart konfigurierbar, dass die Angebotsinformation wahlweise auf verschiedene Endgeräte des Benutzers übertragbar ist.

Die Erfindung ermöglicht also über die erste Schnittstelle die Übertragung einer Bestellinformation seitens des Benutzers an die Versand-Datenbank vorzugsweise über mobile Endgeräte und nutzt somit die spontane Kaufentscheidung des Benutzers aus. Im einfachsten Fall kann über die zweite Schnittstelle der Kauf über dasselbe Endgerät sofort abgewickelt werden. Vorzugsweise erfolgt jedoch der Kauf verzögert über ein weiteres Endgerät, wodurch eine komfortablere Handhabung für den Benutzer und eine optimale Angebotserstellung seitens der Versand-Datenbank sichergestellt werden kann.

Die Bestellinformation umfasst neben der Anfragekennung eine Benutzerkennung, so dass seitens des Benutzers keine aufwendige Registrierung in der Versand-Datenbank notwendig ist, um eine Bestellinformation abzugeben.

Die Auswerteeinheit ermöglicht darüber hinaus eine intelligente Auswertung der Bestellinformationen und insbesondere eine Klassifizierung nach bestimmten Produktgruppen und/oder Dienstleistungen. Soweit der Benutzer zur Einspeisung der Bestellinformation über die erste Schnittstelle ein Mobilfunkgerät verwendet, ist die Bereitstellung einer zentralen Einwahlnummer seitens der Versand-Datenbank möglich. Der Benutzer ist also nicht darauf angewiesen, sich für jedes Produkt bzw. jede Dienstleistung eine bestimmte Einwahlnummer zu merken, sondern er kann die Spezifizierung des Produkts bzw. der Dienstleistung bereits über eine geeignete Codierung der Bestellinformation vornehmen.

Die Möglichkeit des Vertriebs einer großen Produktpalette über eine Einwahlnummer bietet zudem die Möglichkeit der Erstellung eines intelligenten Werbeprofils. Auf der Grundlage der einmalig registrierten Benutzerdaten liegen Absender, Datum und Zeit sowie die gewünschten Produkte bzw. Dienstleistungen bei Eingang der Bestellinformation sofort vor, so dass hiervon ausgehend eine gezielte und effektive Werbung über die zweite Schnittstelle möglich ist.

Eine mögliche Anwendung der Erfindung besteht beispielsweise in der Abfrage von Informationsdaten von einem Radiosender über ein Mobiltelefon. Ein Radiosender kann diesen Dienst seinen Hörern anbieten, um die Attraktivität des Hörprogramms insgesamt zu steigern. Hierbei werden den Hörern in regelmäßigen Abständen Kennungen mitgeteilt, unter denen er bestimmte Informationen abfragen kann. Die Kennung ist dabei Bestandteil der Bestellinformation oder bildet die Bestellinformation selber. Die besagte Kennung versendet der Benutzer per SMS-Nachricht an eine zentrale Einwahlnummer und erhält wenig später die gewünschte Information (z.B. Staumeldungen) als SMS-Nachricht auf sein Mobiltelefon zurück. Die erfindungsgemäße Vorrichtung transformiert dabei die seitens des Radiosenders bereitgestellten Informationen in SMS-Nachrichten und versendet diese auf Anfrage an interessierte Benutzer.

Nach einer bevorzugten Ausführungsform ist vorgesehen, dass über die erste Schnittstelle die Bestellinformation als SMS-Nachricht seitens des Benutzers einspeisbar ist. SMS-Nachrichten können über Mobilfunkverbindungen übertragen werden. SMS ist die Abkürzung für "Short Message Service" und ist ein Dienst, der von Mobilfunkprovidern zur Übermittlung von kurzen Textnachrichten zur Verfügung gestellt wird. Ein besonderer Vorteil der Verwendung dieser SMS-Nachricht besteht darin, dass die SMS-Nachricht eindeutig hinsichtlich des Benutzers identifizierbar ist, da die SMS-Nachricht mit der Rufnummer des Benutzers übertragen wird. Sobald sich der Benutzer also erfindungsgemäß einmalig in der Versand-Datenbank registriert hat, ist eine sofortige Identifizierung einer eingehenden SMS-Nachricht möglich. Dies bedeutet, dass die Benutzerkennung durch die SMS-Nachricht automatisch mitgeliefert wird, so dass als eigentlicher Text in der SMS-Nachricht nur noch die Anfragekennung eingegeben werden muss. Beispielsweise ist es möglich, dass ein Benutzer, der an einer roten Ampel hält, aufgrund eines Werbeplakats eine Bestellung abgibt, wobei das beworbene Produkt auf dem Werbeplakat mit einer entsprechenden Anfragekennung ausgezeichnet ist. Ebenso ist es denkbar, dass eine Bestellung aufgrund eines Werbespots abgegeben wird, der zusammen mit der entsprechenden Anfragekennung in einem Kino gezeigt wird. Schließlich können Bestellungen immer dann abgegeben werden, wenn der Benutzer bestimmten Wartezeiten, z.B. beim Zahnarzt, am Bahnhof, am Flughafen etc. unterworfen ist.

Bei Verwendung des SMS-Dienstes für die erste Schnittstelle müssen insgesamt somit keine neuen Konfigurationen des Mobiltelefons vorgenommen werden, sondern als Voraussetzung muss lediglich eine einmalige Registrierung bei der Versand-Datenbank erfolgen. Hierbei stehen dem Benutzer drei Möglichkeiten zur Verfügung:
- Über die Versand-Datenbank-Internetseite. Hier kann sich der Anwender registrieren und seine Daten und Präferenzen zu jedem Zeitpunkt ändern oder erweitern.
- Über sein Handy. Es ist eine Registrierung über das Versenden einer sms möglich. Hierzu muss der Benutzer allerdings die Angaben in der richtigen Reihenfolge vornehmen. Dazu erhält er von der Versand-Datenbank eine sms in der die Reihenfolge der Daten aufgelistet ist. Bei der Registrierung mittels sms können jedoch nicht alle Dienste der Versand-Datenbank in Anspruch genommen werden, da die Registrierung sämtlicher Präferenzen aufgrund der Beschränkung von 160 Zeichen pro sms nicht möglich ist.
- Über den Call Center der Versand-Datenbank. Hier kann jeder Interessent sich über einen Operator eintragen lassen und sein Kundenprofil entsprechend seinen Bedürfnissen pflegen und ändern.

Mittels caller identification wird dem Kunden sein in der Datenbank hinterlegtes Profil zugewiesen. Die eingegangene sms wird falls möglich entsprechend der Versand-Datenbank automatisch bearbeitet und beantwortet. Sollte die Versand-Datenbank die Anfrage nicht direkt beantworten können, so erfolgt eine Umwandlung in eine e-Mail, die als Anfrage an unsere Kooperationspartner weitergeleitet wird. Wenn von dort die Rückmeldung kommt, dass das Produkt erhältlich und lieferbar ist, wird eine sms mit Preis und Bestellmöglichkeit an den Interessenten zurückgeschickt. Dieser entscheidet nun über den Kauf. Dann erst wird die ursprüngliche sms zusammen mit den Kundendaten als e-Mail dem Anbieter als Kaufgesuch übermittelt. Liegen mehrere Anbieter zu ein und demselben Produkt vor, entscheidet die Versand-Datenbank anhand der Userpräferenzen, welcher Anbieter ausgewählt wird (Lieferzeit, Preis,...). Es ist für den Kunden auch möglich, einen Anbieter direkt auszuwählen.

Bei bestimmten Produkten können übliche Kennzeichnungen auf dem Produkt zur Eingabe der Anfragekennung vorteilhaft ausgenutzt werden. Bei Büchern kann die Anfragekennung beispielsweise aus der Anfangskennung "Buch" gefolgt von der ISBN-Nummer des Buchs bestehen. Aufgrund der Anfangskennung "Buch" erkennt die Auswerteeinheit, dass die nachfolgende Nummer als ISBN-Nummer zu interpretieren ist und erstellt aufgrund der Angebotsdaten ein entsprechendes Angebot für das jeweilige Buch. Soweit das Produkt mit einem sogenannten EAN-Code versehen ist, kann als Anfangskennung "EAN" verwendet werden, der die dreizehnstellige EAN-Nummer folgt. Bei derartig eindeutig identifizierbaren Produkten ist der Benutzer somit in der Lage, ein Angebot über das entsprechende Produkt zu jeder und an jedem Ort sofort einzuholen, wenn er Verlangen danach hat, er aber räumlich oder zeitlich normalerweise nicht in der Lage wäre, dem Kaufwunsch nachzukommen.

Alternativ zu einer SMS-Nachricht kann die erste Schnittstelle selbstverständlich auch auf andere Weise bedient werden. Beispielsweise ist es denkbar, dass die erste Schnittstelle an einem Sprachcomputer angeschlossen ist, über den eine Bestellinformation aufgrund einer Spracheingabe des Benutzers einspeisbar ist. Eine andere Möglichkeit besteht darin, dass die erste Schnittstelle an ein Operator-Terminal angeschlossen ist, über das eine Bestellinformation aufgrund der manuellen Eingabe eines Operators einspeisbar ist. In beiden Fällen kann der Benutzer also auf eine einfache Telefonverbindung zurückgreifen, um telefonisch ein Angebot über die Versand-Datenbank einzuholen. Dieser Fall könnte beispielsweise bei Ausstrahlung von Fernsehspots im Heimbereich Anwendung finden.

Nachdem über die erste Schnittstelle eine Bestellinformation seitens des Benutzers auf die Versand-Datenbank übertragen wurde, veranlasst die Versand-Datenbank über die zweite Schnittstelle die Übertragung einer entsprechenden Angebotsinformation. Es ist denkbar, dass der Benutzer im Rahmen der Bestellinformation bereits angibt, über welche Kommunikationsart er die Übertragung seitens der zweiten Schnittstelle wünscht. Ebenfalls ist es denkbar, dass der Benutzer die Übertragungsart über die zweite Schnittstelle in seinen Benutzerdaten auf der Versand-Datenbank abspeichert.

Nach einer bevorzugten Ausführungsform ist vorgesehen, dass die zweite Schnittstelle derart konfigurierbar ist, dass die Angebotsinformation wahlweise auf verschiedene Endgeräte übertragbar ist. Auf diese Weise wird für den Benutzer größtmögliche Flexibilität gewährleistet. Während der Bestellvorgang beispielsweise über ein Mobiltelefon mit einer SMS-Nachricht durchführbar ist, kann der Benutzer oder auch der jeweilige Betreiber die zweite Schnittstelle derart konfigurieren, dass die Angebotsinformation mit den gewünschten technischen Mitteln gesichtet werden kann. Bei aufwendigen Angeboten ist es beispielsweise sinnvoll, die Angebotsinformation nicht direkt auf dem Display eines Mobiltelefons, sondern auf einem größeren Display eines Personal Computers durchzusehen oder auch auf einem geeigneten Endgerät auszudrucken.

Nach einer weiteren bevorzugten Ausführungsform ist vorgesehen, dass über die zweite Schnittstelle die Angebotsinformation als SMS-Nachricht an ein Mobiltelefon des Benutzers übertragbar ist. In diesem Fall kann die Angebotsinformation grundsätzlich unmittelbar nach Übertragung der Bestellinformation übertragen werden, so dass der Kaufvorgang seitens des Benutzers sofort abgeschlossen werden kann.

In vielen Fällen wird der Benutzer allerdings gar nicht die Gelegenheit oder das Interesse haben, unmittelbar nach Abgabe der Bestellinformation bereits die Angebotsinformation zu sichten und zu bestätigen. In solchen Fällen ermöglicht es die Erfindung, dass über die zweite Schnittstelle die Angebotsinformation auf das Internet-Konto des Benutzers übertragbar ist. Sofern der Benutzer bereits über ein eigenes Internet-Konto oder über eine eigene Homepage verfügt, können die Informationen auf dieses Internet-Konto eingespielt werden. Vorzugweise wird das Internet-Konto jedoch seitens der Versand-Datenbank neu erstellt und kann aufgrund der Benutzerdaten individuell auf den jeweiligen Benutzer abgestimmt werden. Nach Abgabe der Bestellinformation kann der Benutzer somit zu einer für ihn günstigen Zeit auf die entsprechend eingerichtete Homepage zugreifen und die entsprechenden Angebotsinformationen sichten. Soweit ihm das Angebot zusagt, erfolgt die Annahme des Angebots über eine entsprechende Nachricht an die Versand-Datenbank direkt von der Homepage aus (beispielsweise ausgelöst durch einen Mouseclick).

Nach einer bevorzugten Ausführungsform ist außerdem vorgesehen, dass über die zweite Schnittstelle die Angebotsinformation als e-Mail an den Benutzer übertragbar ist. Diese Übertragungsform hat den Vorteil, dass auch mit geringeren technischen Möglichkeiten die Angebotsinformation zu gegebener Zeit abrufbar ist. Der Bestellvorgang kann hier durch eine einfache e-Mail als Rückantwort abgeschlossen werden.

Insgesamt ist die zweite Schnittstelle demnach vorzugsweise bidirektional derart ausgestaltet, dass seitens des Benutzers nach dem Empfang der Angebotsinformation eine Nachricht zur Angebotsannahme an die Versand-Datenbank übertragbar ist.

Ein weiterer wesentlicher Aspekt der Erfindung ist die Ausgestaltung der Auswerteeinheit. Bekannte Verfahren zur computergestützten Bestellung von Produkten setzen voraus, dass die Anfragekennung eindeutig einem bestimmten Produkt zugeordnet werden kann, wobei die entsprechenden Produktdaten in der Versand-Datenbank gespeichert sind. Eine entsprechende Ausgestaltung der Auswerteeinheit ermöglicht es jedoch, dass verschiedenste Typen von Anfragekennungen an die Versand-Datenbank abgesandt werden, die durch eine entsprechende Auswertelogik der Auswerteeinheit automatische erkannt und weiterverarbeitet werden.

Beim Empfang einer Bestellinformation ordnet die Auswerteeinheit die Benutzerkennung zunächst bestimmten Benutzerdaten und die Anfragekennung bestimmten Angebotsdaten zu. Soweit die Benutzerkennung in den Benutzerdaten noch nicht registriert ist, folgt als Rückantwort zunächst eine Registrierungsprozedur.

Bei Einleitung eines Kaufs ist die Anfragekennung durch die Auswerteeinheit in der Regel als eine Kaufgegenstand identifizierbar, aufgrund dessen die Angebotsdaten des Kaufgegenstands in die Angebotsinformation geladen werden. Es ist aber auch denkbar, dass mit der Anfragekennung nicht ein bestimmter Kaufgegenstand, sondern beispielsweise ein Lieferant oder ein Unternehmen identifizierbar ist. Aufgrund dieser Kennung werden dann Angebotsdaten in Form von Informationen über die Lieferanten bzw. über das Unternehmen in die Angebotsinformation geladen.

Schließlich ist es auch denkbar, dass der Benutzer lediglich Informationen über ein bestimmtes Wissensgebiet abfragen möchte. In diesem Fall identifiziert die Auswerteeinheit die Anfragekennung als ein bestimmtes Wissensgebiet, aufgrund dessen die Angebotsdaten dann in Form von Informationen über das Wissensgebiet in die Angebotsinformation geladen werden. Insbesondere in diesem Fall ist es besonders vorteilhaft, wenn diese Informationen über die zweite Schnittstelle auf ein Internet-Konto übertragen werden können, da dann auch große Informationsmengen von dem Benutzer gesichtet werden können. Die Anforderung der Informationen kann allerdings erfindungsgemäß von jedem beliebigen Endgerät über eine Telefonleitung an die Versand-Datenbank erfolgen.

Nach einer bevorzugten Ausführungsform ist vorgesehen, dass übereinstimmende Anfragekennungen von verschiedenen Benutzern über einen bestimmten Zeitraum aufgesammelt werden, um einen Mengenrabatt zu erzielen. Da die Angebots-Datenbank mehreren Benutzern zur Verfügung gestellt wird, besteht eine gewisse Wahrscheinlichkeit, dass über einen bestimmten Zeitraum identische Produkte oder identische Angebote von verschiedenen Benutzern angefordert werden. Dies kann dazu ausgenutzt werden, um einen Mengenrabatt bei den jeweiligen Lieferanten zu erzielen. In diesem Fall erweist es sich als besonders vorteilhaft, dass die Angebotsinformation zeitversetzt über die zweite Schnittstelle auf ein anderes Endgerät übertragen werden kann, um auf diese Weise nach Ablauf des vorgegebenen Zeitraums vom Benutzer abrufbar zu sein.

Ein besonderes Anwendungsgebiet zum computergestützten Bestellen von Produkten wird für reisende Geschäftsleute festgestellt, da diese unterwegs in der Regel nicht in der Lage Produkte zu herkömmlichen Ladenöffnungszeiten einzukaufen. Mit der erfindungsgemäßen Vorrichtung können Geschäftsleute in besonderer Weise unterstützt werden. Dies wird dadurch erreicht, dass die Anfragekennung eine Ortinformation des Benutzers umfasst, aufgrund der die Angebotsdaten gefiltert werden. Die Ortinformation wird also von der Versand-Datenbank mit den ermittelten Angebotsdaten verknüpft, um dem Benutzer hinsichtlich eines momentanen Standorts besonders interessante Angebote abgeben zu können. Bei Übermittlung der Ortinformation gibt der Benutzer zu erkennen, dass für ihn nur ortsorientierte Angebote relevant sind, so dass Angebote hinsichtlich Preisgestaltung und Produktvielfalt in den Hintergrund treten.

Beispielsweise ist es somit möglich, einem Benutzer ein bzw. mehrere Angebote über freie Hotelplätze in seiner Nähe zu machen.

Durch die Verknüpfung mit Standortdaten eröffnen sich weitere Anwendungen. Sobald der Mobilfunkprovider an die sms die Funkzelldaten anhängt, kann z.B. eine Anfrage an die Versand-Datenbank gesendet werden, wo sich das -zum eigenen Standort- nächste Hotel in einer bestimmten Preisklasse befindet, oder ob sich ein Mitglied einer in der Präferenzenliste definierten Gruppe in der Nähe des eigenen Standortes befindet. Hierzu wird auf der Versand-Datenbank eine digitale Landkarte mit dem Raster der Funkzellen hinterlegt, so dass die standortbezogenen Daten aus der Datenbank ausgelesen, und als sms an den Interessenten zurückgeschickt werden können. Bei der Registrierung entscheidet ein Anwender ob er an dem Gruppen-SMS-Service teilnehmen möchte. Versucht dann ein Kunde ein Treffen mit Gruppenmitgliedern (z.B. alle Mitarbeiter einer Firma, eines Vereines o.ä.) in einer bestimmten Zelle zu arrangieren, so werden alle Teilnehmer die sich innerhalb dieser Zelle befinden, und die an dem Gruppen-SMS-Service teilnehmen per sms über den Wunsch informiert. Aus Gründen des Datenschutzes kann der Anwender der Übermittlung seiner Standortdaten jedes Mal erneut durch die Eingabe einer PIN Nummer zustimmen. Diese Zustimmung gilt dann jeweils nur für die zuletzt erfolgte Transaktion. Analog dazu kann der Fall mit Wandlung in eine e-Mail und Versand an Anbieter (siehe Hotelbeispiel) angenommen werden.

Selbstverständlich sind die oben beschriebenen und/oder in den Unteransprüchen aufgeführten Ausführungsformen nicht nur in der jeweils angegebenen Kombination, sondern auch in anderen Kombinationen oder in Alleinstellung anwendbar.

Im folgenden wird die Erfindung anhand verschiedener Ausführungsbeispiele mit Bezug auf die beiliegenden Zeichnungen näher erläutert. Es zeigen:
- Fig. 1: zeigt die Grundstruktur einer erfindungsgemäßen Vorrichtung zur computergestützten Bearbeitung von Bestellinformationen,
- Fig. 2: mit Fig. 2a und Fig. 2b zeigt den Ablauf einer computergestützten Buchbestellung nach dem erfindungsgemäßen Verfahren,
- Fig. 3: zeigt eine nach der OMT (Object Modelling Technique) Methode erstellte Prozessanalyse der erfindungsgemäßen Vorrichtung zur computergestützten Bearbeitung von Bestellinformationen und
- Fig. 4: zeigt ein Beispiel für eine Registrierungsmaske zur Registrierung der Benutzerdaten auf der erfindungsgemäßen Vorrichtung zur computergestützten Bearbeitung von Bestellinformationen.

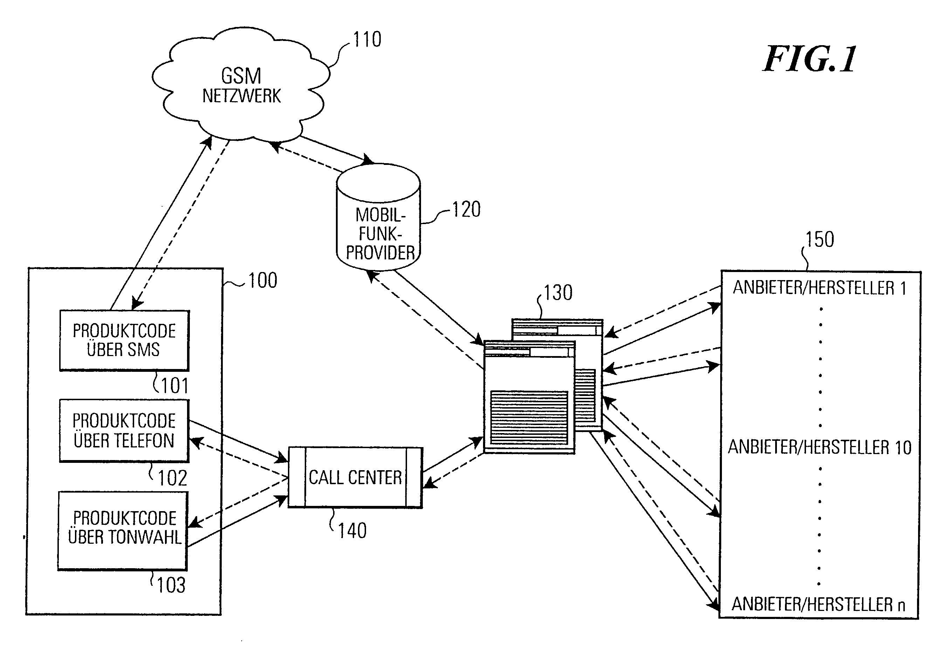

Fig. 1 zeigt die Grundstruktur einer erfindungsgemäßen Vorrichtung zur computergestützten Bearbeitung von Bestellinformationen. Mit 100 ist eine Gruppe von Benutzern bezeichnet, die sich wiederum in Benutzergruppen 101, 102 und 103 unterteilen, und zwar je nachdem, ob die Benutzergruppe eine Bestellinformation über den SMS-Code einer Mobilfunkverbindung oder über eine herkömmliche Telefonverbindung abwickelt. Soweit die Bestellinformation über den bevorzugten Weg einer SMS-Nachricht einer Mobilfunkverbindung übertragen wird, läuft die Nachricht über das GSM-Netzwerk 110 zu dem Mobilfunkprovider 120, der die SMS-Nachricht an die Versand-Datenbank 130 weiterleitet.

Zusätzlich zu der erfindungsgemäßen Möglichkeit der Übertragung der Bestellinformation über die SMS-Nachricht einer Mobilfunkverbindung kann die Versand-Datenbank 130 die Möglichkeit enthalten, über ein Call Center 140 betrieben zu werden. Mit einem derartigen Call Center 140 können auch die genannten Benutzergruppen 102 und 103 mit der Versand-Datenbank 130 bedient werden, die über kein Mobilfunktelefon verfügen. Zum einen kann die Bestellinformation, z.B. in Form einer Anfragekennung bzw. eines Produktcodes, in herkömmlicher Weise durch Sprachübermittlung über eine Telefonverbindung übermittelt werden. Eine im Call Center 140 tätige Vermittlungsperson leitet die Bestellinformation sodann in geeigneter Weise an die Versand-Datenbank 130 weiter. Eine andere Möglichkeit besteht darin, die Übermittlung der Bestellinformation über eine Telefonverbindung automatisiert anzubieten. In diesem Fall bietet sich die Übermittlung der Bestellinformation über Tonwahl an, wobei der Benutzer durch die Tonwahlsteuerung automatisch durch ein entsprechendes Menü im Call Center 140 geführt wird.

Die Versand-Datenbank 130 hat Zugriff auf Produktdaten und Angebotsdaten von Produkten verschiedener Anbieter, wobei die Produktdaten bzw. Angebotsdaten entweder direkt auf der Versand-Datenbank gespeichert sein können oder durch Zugriff auf entsprechenden Datenbanken der Anbieter 150 zur Verfügung gestellt werden können.

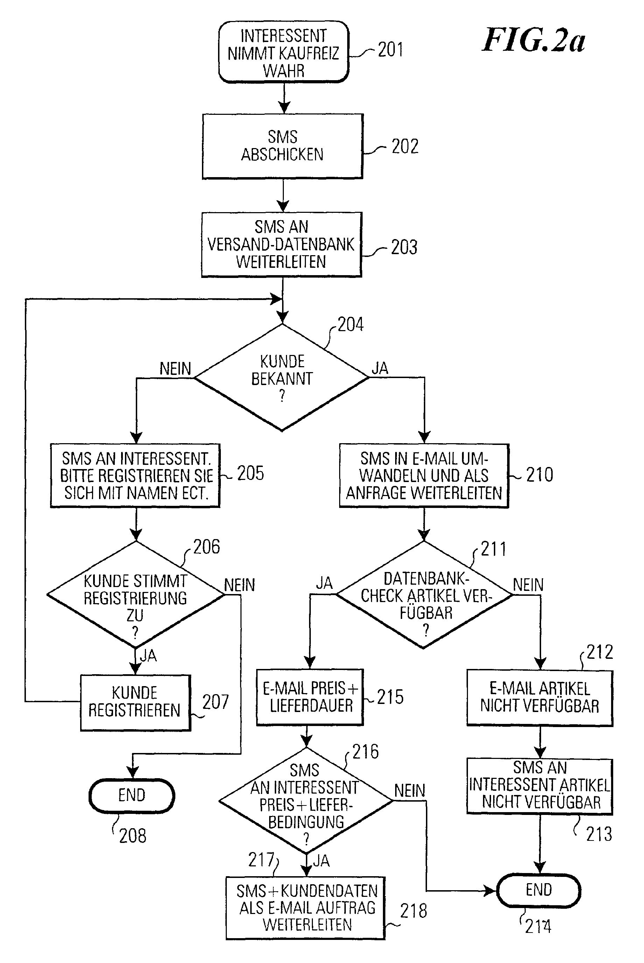

Fig. 2a zeigt den Ablauf einer computergestützten Buchbestellung nach dem erfindungsgemäßen Verfahren. Hierbei wird angenommen, dass es sich gemäß Fig. 1 um die Benutzergruppe 101 handelt, also eine Bestellung über die SMS-Nachricht einer Mobilfunkverbindung erfolgt.

Im Schritt 201 nimmt der Benutzer zunächst den Kaufanreiz wahr. Dies kann beispielsweise dadurch erfolgen, dass der Benutzer ein ihn interessierendes Buch zufällig zu Gesicht bekommt und dieses Buch sofort bestellen möchte. Im Schritt 202 schickt der Benutzer daraufhin eine entsprechende SMS-Nachricht ab. Die SMS-Nachricht enthält mindestens eine Anfragekennung, anhand der das Produkt eindeutig identifizierbar ist. Diese Kennung kann beispielsweise aus der sogenannten ISBN-Nummer des Buchs bestehen. Es ist auch denkbar, dass die Anbieter grundsätzlich für jedes Produkt sogenannte Identifikationsnummern vergeben, mit denen das jeweilige Produkt eindeutig identifizierbar ist. Hierbei bietet sich z.B. auch die sogenannte "European Article Number" (EAN) an, die auf vielen Produkten inzwischen in Form eines sogenannten Identifikations- und Strichcodierungs-Systems aufgebracht ist. Eine weitere Möglichkeit bestände schließlich darin, dass der Anbieter selber eine einprägsame Identifikationsnummer vergibt, die beispielsweise nicht nur auf den Produkten, sondern auch auf entsprechenden Werbeträgern aufgebracht ist, damit der Benutzer bei jedem Werbeanreiz das Produkt sogleich bestellen kann.

Die SMS-Nachricht läuft über das Mobilfunknetzwerk des Mobilfunkproviders 120, der im Schritt 203 die Nachricht an die Versand-Datenbank weiterleitet. Die Versand-Datenbank prüft im Schritt 204, ob der Kunde bereits in der Datenbank registriert ist. Falls dies nicht der Fall ist, wird im Schritt 205 eine SMS-Nachricht an den Kunden mit der Aufforderung gesandt, sich mit den entsprechenden Angaben registrieren zu lassen. Stimmt der Kunde im Schritt 206 der Registrierung zu, so wird der Kunde im Schritt 207 in der Datenbank registriert und kann mit der Bestellung nach dem Schritt 204 fortfahren. Stimmt der Kunde dagegen im Schritt 206 der Registrierung nicht zu, ist der Bestellvorgang im Schritt 208 beendet.

Ist der Kunde in der Versand-Datenbank registriert, wird die von dem Kunden abgesandte SMS-Nachricht in der Versand-Datenbank 130 in eine e-Mail umgewandelt und als Anfrage an den Anbieter weitergeleitet, um somit direkt die Verfügbarkeit des jeweiligen Produktes in Erfahrung zu bringen. Seitens des Anbieters wird sodann in einer entsprechenden Datenbank entschieden, ob das angeforderte Produkt sofort verfügbar ist. Soweit das Produkt nicht verfügbar ist, erfolgt im Schritt 212 eine e-Mail-Zurückantwort an die Versand-Datenbank, die im Schritt 213 an den Benutzer weitergeleitet wird, woraufhin im Schritt 214 der Bestellvorgang beendet ist. Falls das Produkt dagegen bei dem Anbieter verfügbar ist, sendet dieser als Rückbestätigung im Schritt 215 eine e-Mail an die Versand-Datenbank mit Preis und Lieferdaten des jeweiligen Produktes. Die Versand-Datenbank entscheidet daraufhin, ob das Produkt an den Benutzer weitergeleitet werden soll und entscheidet daraufhin, ob ein Kundenauftrag erfolgen soll.

Im Schritt 216 erfolgt sodann die Übermittlung einer SMS-Nachricht an den Benutzer als Auftragsbestätigung mit Preis- und Lieferbedingungen. Soweit der Benutzer dieses Angebot seitens der Versand-Datenbank ablehnt, ist der Bestellvorgang im Schritt 214 wiederum beendet.

Falls der Benutzer dagegen die Bestellung annehmen möchte, bestätigt er dies im Schritt 217 über eine weitere SMS-Nachricht an die Versand-Datenbank, woraufhin im Schritt 218 die Versand-Datenbank den Kundenauftrag als e-Mail weiterleitet.

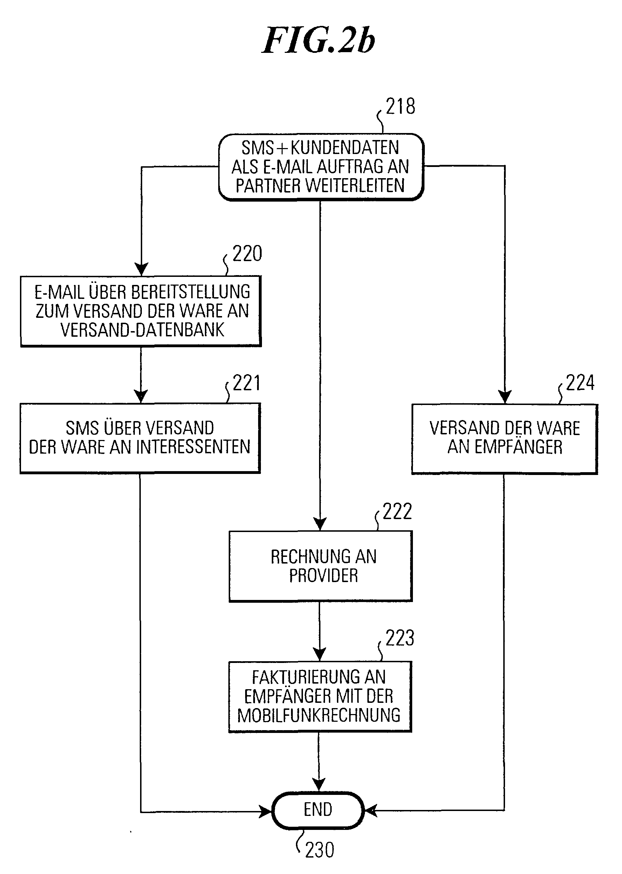

In Fig. 2b ist die Weiterleitung des Kundenauftrags gemäß dem Schritt 218 im einzelnen dargestellt. Demnach folgt zunächst im Schritt 220 die Übersendung einer e-Mail über die Bereitstellung zum Versand der Ware an die Versand-Datenbank seitens des Anbieters, der diese Nachricht in eine SMS-Nachricht an den Benutzer im Schritt 221 weiterleitet. Sodann erfolgt ausgehend von dem Schritt 218 in den Schritten 222 und 223 die Fakturierung der Bestellung über den Provider. Ausgehend von dem Schritt 218 erfolgt schließlich noch seitens des Anbieters der Versand der Ware im Schritt 224 auf üblichem Wege. In jedem Fall ist damit der Bestellvorgang im Schritt 230 beendet.

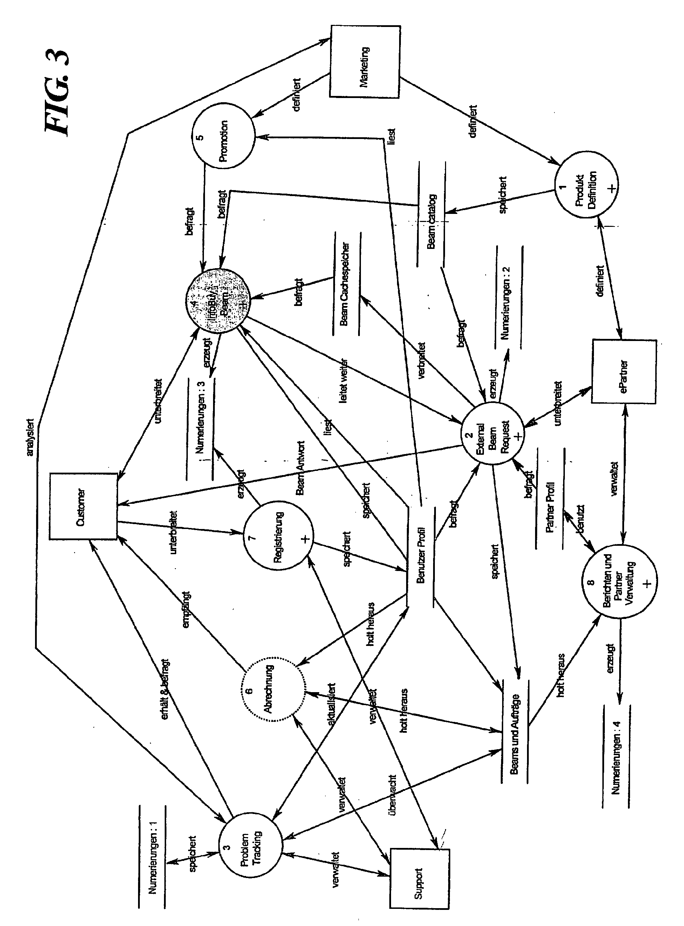

Fig. 3 zeigt eine nach der OMT (Object Modelling Technique) Methode erstellte Prozessanalyse der erfindungsgemäßen Vorrichtung zur computergestützten Bearbeitung von Bestellinformationen.

Für die Beschreibung der einzelnen Prozesse haben sich bestimmte Fachbegriffe herausgebildet, die im folgenden der Einfachheit halber beibehalten werden. Als "Beamgate" wird abgekürzt die erfindungsgemäße Vorrichtung zur computergestützten Bearbeitung von Bestellinformationen verstanden. Der Präfix "Beam" wird zur Kennzeichnung aller Vorgänge verwendet, die über das Beamgate abgewickelt werden. Ein "Beamprodukt" ist folglich ein Produkt, das aufgrund einer Bestellinformation über das Beamgate angefordert wird.

Im Allgemeinen basiert das Beamgate auf der Erfüllung von Benutzeranfragen mit entsprechenden Informationen und/oder der Abwicklung bzw. Weiterleitung von Bestellungen. Das Beamgate unterhält einen Cache aller aktuellen Informationen, die über das Beamgate abrufbar sind. Diese Informationen werden von Geschäftspartnern bereitgestellt.

Bei bestimmten Inhalten bietet das Beamgate die Möglichkeit an, dem Benutzer Produkte zum Spontankauf anzubieten. Um Kaufaufträge durchführen zu können, baut das Beamgate eine Transaktionsabfolge auf, die alle relevante Informationen bündelt, ausgehend vom Angebot bis hin zur endgültigen Lieferung der Ware.

Darüberhinaus erstellt das Beamgate aus seinen Gebrauchsstatistiken und zusätzlichen Benutzerdaten (Adresse, etc.) Kundenprofile. Diese Profile werden werbewirksam eingesetzt, um Werbung unmittelbar über die zweite Schnittstelle, also über den Rückkanal, zu senden. Werbebotschaften können demnach in Abhängigkeit von Kontext, Dienst, Zeit und Kundenmerkmale gestaltet werden.

Das Beamgate unterstützt verschiedene Medien zum Empfang von Benutzeranfragen und dem Versand von Antworten. Diverse Technologien können durch geeignete Front-ends gleichzeitig unterstützt werden, insbesondere sind SMS (Short Message Service), WAP (Wireless Application Protocoll) and Palm WebClipping als solche Front-ends zu erwähnen.

Die in Fig. 3 abgebildeten graphischen Elemente orientieren sich nach der OMT Methode (Object Modelling Technique) und sind wie folgt zu lesen:
- Vierecke stellen eine *External Entity* dar (gegebene, dem Gesamt-Prozess außenstehenden Einheiten). Externe Einheiten können Personen oder Software-Schnittstellen wiedergeben.
- Kreise stellen zusammengesetzte oder einfache Prozesseinheiten dar (*Tasks*). Kreise die mit unterbrochenen Linien gezeichnet werden stellen geplante, jedoch noch nicht implementierte Prozesse dar. Ein Prozess kann durch ein oder mehrere Programme oder Software Komponenten realisiert werden.
- Parallele Balken stellen eine Datenquelle oder eine Datenbank dar. Datenbanken, die von vielen Prozessen benutzt werden, können mehrfach auf dem Diagram erscheinen. In einem solchen Fall wird eine fortlaufende Nummer an den Datenbanknamen angehängt.
- Verbindungslinien geben die Interaktionen zwischen den Elementen wieder. Diese können einseitig oder beidseitig sein. Beispielsweise sind Prozesse, die in eine Datenbank lesen und schreiben, mit dem entsprechenden Symbol durch einen beidseitigen Pfeil verbunden.

Im folgenden werden einige der wichtigsten Objekte beschrieben.

### Externe Einheiten

Ein "Customer" ist Besitzer eines mobilen Telefons oder Datenendgerätes, der die Dienste von dem Beamgate nutzt. Er kann Informationen abrufen und oder von Kaufangeboten Gebrauch machen. Der Benutzer schaltet Beamgate-Dienste für sein mobiles Endgerät über den Registrierungsprozess frei.

Ein "Support" ist das "Customer Care Center" für das Beamgate. Diese Funktion hilft solchen Benutzern, die Eingabefehler machen oder weitere Informationen über angebotene Dienste erhalten möchten.

Unter "ePartner" werden Geschäftspartner verstanden, die an das Beamgate Angebotsdaten liefern. Sie fallen in zwei Kategorien: "Content Provider" und "Fulfiller". Content Provider sind solche Partner, die Informationen oder allgemeine Inhalte über das Beamgate bereitstellen. Fulfiller sind Partner, in deren Auftrag ein Angebot von dem Beamgate übermittelt wird und Warenversand und Bezahlung inklusive Zahlungsausfallrisiko eines Kaufauftrages übernehmen.

Unter dem Begriff "Marketing" werden die Abläufe zur Definition und Optimierung von Produkten sowie zur Definition von Werbebotschaften in Abstimmung mit Werbepartnern zusammengefaßt.

### Produktdefinition

Beamgate-Produkte (auch Beams genannt) können von externen Geschäftspartnern oder vom Beamgate-Marketing definiert und modifiziert werden. Beams erhalten eine eindeutige ID, die es dem Beamgate ermöglicht, die Anzahl von empfangenen und versandten Nachrichten genau zu dokumentieren. Alle Informationen über die Beam-Produkte werden in der Beam-Catalog Datenbank gespeichert.

### Prozessdefinitionen

### InfoBuy Beam

Der eingehende Benutzer-Request (Anfrage) wird analysiert. Er wird in Worte zerlegt und mit einer Aliastabelle im Beam-Catalog abgeglichen. Ist der Request eindeutig einem Beam-Produkt zuzuordnen, werden alle weiteren Informationen, die das Beam-Objekt ausmachen (Partner ID, Beschreibung, Parameter Typen und Anzahl, etc.), zu dem Request-Objekt hinzugefügt und zur weiteren Verarbeitung bereitgestellt. In diesem Schritt werden bereits Bestellungen (gekennzeichnet durch einen Angebotscode) von Informationsanfragen ausgesondert.

Im Normalfall kann das Beamgate zu jedem Request-Objekt einen Dienst zuordnen und eine passende Antwort formulieren. Sie gehört zu einer der folgenden Kategorien:
- Informationsanfrage: die aktuellsten Informationen werden vom Beam-Cache gelesen und dem Ausgangsmedium angepaßt (Textlänge, Format, etc.).
- Bestellung: Vollständigkeit der vorhandenen Bestelldaten wird überprüft und/oder nach Bedarf vom Benutzer noch erfragt (z.B. Lieferadresse, etc.).

Wenn der eingegebene Text keinem der definierten Produkte zuzuordnen ist, wird nach Textmustern im Benutzer-Request gesucht und einer semantischen Analyse unterzogen. Aus dieser Analyse leiten sich die folgenden Verarbeitungsschritte ab, die wiederum zu den folgenden Kategorien gehören können:
- Ein Dienst kann eindeutig zugeordnet werden. Z.B. wird ANTENNE BAYERN STAU A9 dem Dienst ANTENNE A9 zugeordnet. In diesem Fall wird der Request umgeschrieben und zur weiteren Verarbeitung bereitgestellt.
- Ein Dienst kann nicht eindeutig im Beamgate zugeordnet werden, kann aber einem Informationsprovider zugeordnet werden. Z.B. wird der Text SUPER JUNGS! JUMP MACHT TOLLE MUSIK! dem Partner (JUMP) als Request zugewiesen. In diesem Fall wird dem Benutzer eine Meldung zurück gesendet, die ihm die Partner-Dienste und deren Benutzung erklärt.
- Weder Dienst noch Partner können zugeordnet werden. In diesem Fall wird dem Benutzer eine Meldung zurück gesendet, die ihm die Beamgate-Dienste und deren Benutzung erklärt.

Benutzeranfragen, die als Transaktionselemente identifiziert werden, werden zum Transaktionsobjekt hinzugefügt. Eine Transaktion in dem Beamgate kann dabei mehrere Tage offen bleiben. Zum Beispiel tritt häufig der Fall ein, dass ein Kunde den von dem Beamgate angebotenen Preis mit demjenigen im Laden vergleicht möchte, bevor er (möglicherweise) Tage später eine Bestellung aufgibt. Jede Benutzeranfrage wird zum statistischem Profil des Benutzers hinzugefügt. Dies erlaubt es dem Beamgate, zusammen mit freiwillig angegebenen Benutzerdaten wie Adresse, Alter, Hobbys usw. ein sehr wirksames Werbeprofil zu erstellen.

### External Beam Request

Dieser Prozess umfaßt:
- Speicherung und Aktualisierung von Inhalten von externen Partnern in dem Beam Cache;
- Einholung von Preisen und Verfügbarkeit von angebotenen Produkten sowie Generierung von Angeboten in der Transaktionsdatenbank; und
- Weiterleitung von Bestellungen, die von externen Partnern abgewickelt werden.

Datenschnittstellen zu externen Partner werden auf der Basis von XML (Extensible Markup Language) Wörterbüchern definiert und über gängige Internet Protokolle implementiert. Anzustreben sind einheitliche Datendefinitionen, die als Standard etabliert werden oder als solche bereits existieren.

### Problem Tracking

Alle Fehler im System, insbesondere Fehlereingaben von Benutzern, werden in einer Problemdatenbank (Tickets) gespeichert. Das Beamgate Kundensupport Center hat die Möglichkeit, in Realzeit auf Benutzungsprobleme zu reagieren.

### Promotion

Beamgate Marketing definiert Werbebotschaften für den Rückkanal. Diese Botschaften werden für Kategorien in den folgenden Bereichen definiert:
- Dienste und Dienstgruppen (Thema) ;
- Zeitliche Abfolge (rotierende Texte);
- Kunden Zielgruppe gemäß statischen Merkmale;
- Kundenkategorie gemäß internem Gebrauchsprofil;
- Anzahl der Botschaften pro Zeitraum (Tag, Woche, Monat);
- Geographische/Regionale gemäß statischer Merkmale;

### Registrierung

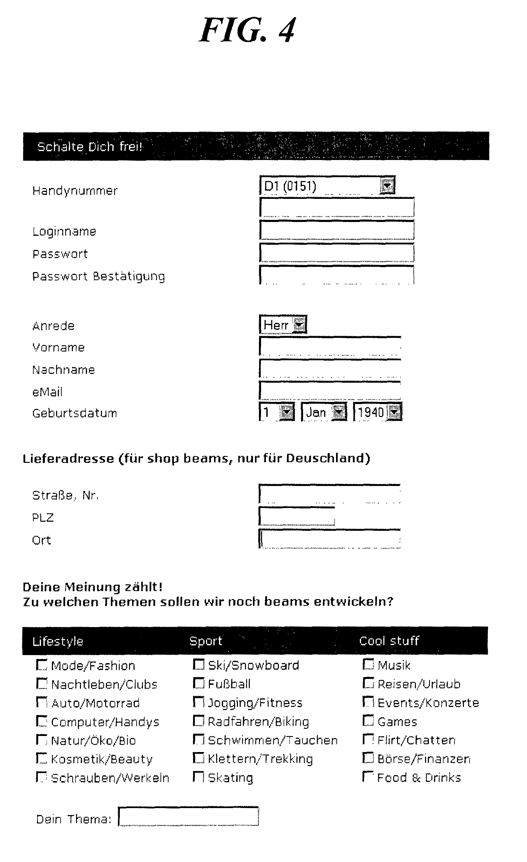

Fig. 4 zeigt ein Beispiel für eine Registrierungsmaske zur Registrierung der Benutzerdaten auf dem Beamgate. In der Registrierungsmaske gibt der Benutzer seine Profildaten ein. Darüber hinaus erhält der Benutzer die Option, bestimmte Dienste freizuschalten.

Folgende Daten werden registriert:
- Nickname/Passwort
- Vor und Nachname
- Geburtsdatum
- E-Mail
- Adresse
- Interessen

Das Beamgate unterstützt darüber hinaus die folgenden Optionen:
- Beam Abonnement: Benutzer können einen bestimmten Beam zu einer gegebenen Uhrzeit täglich oder werktäglich für sich von dem Beamgate aktivieren lassen. Mit diesem Feature kann man sich z.B. eine Verkehrsinfo für eine Fahrtroute jeden Tag zuschicken lassen, bevor man das Haus verläßt.
- Newsletter Abonnement: Benutzer können sich bestimmte Informationsrundschreiben von dem Beamgate zuschicken lassen.
- Event/Produkt Infos: Benutzer können sich Ankündigungen zu bestimmten Ereignissen und/oder Produkten zukommen lassen.

## Patentansprüche

1. Vorrichtung zur computergestützten Bearbeitung von Bestellinformationen,
mit einer Versand-Datenbank, auf der Angebotsdaten gespeichert sind und/oder auf die Angebotsdaten über eine Kommunikationsverbindung übertragbar sind, und auf der Benutzerdaten gespeichert sind,
mit einer ersten Schnittstelle zur benutzerseitigen Einspeisung einer Bestellinformation in die Datenbank, wobei die Bestellinformation eine Benutzerkennung und eine Anfragekennung umfasst,
mit einer Auswerteeinheit zur Auswertung der Bestellinformation und zur Bereitstellung einer Angebotsinformation, wobei die Angebotsinformation in Abhängigkeit von der Anfragekennung auf der Grundlage der Angebotsdaten ermittelt wird, und
mit einer zweiten Schnittstelle, über die die Angebotsinformation in Abhängigkeit von der Benutzerkennung an ein benutzerseitiges Endgerät übertragbar ist.

2. Vorrichtung nach Anspruch 1, dadurch gekennzeichnet, dass zur Einspeisung der Bestellinformation über die erste Schnittstelle eine unidirektionale Verbindung vorgesehen ist.

3. Vorrichtung nach einem der Ansprüche 1 - 2, dadurch gekennzeichnet, dass über die erste Schnittstelle die Bestellinformation als SMS-Nachricht seitens des Benutzers einspeisbar ist.

4. Vorrichtung nach einem der Ansprüche 1 - 3, dadurch gekennzeichnet, dass die erste Schnittstelle an einen Sprachcomputer angeschlossen ist, über den eine Bestellinformation aufgrund einer Spracheingabe des Benutzers einspeisbar ist.

5. Vorrichtung nach einem der Ansprüche 1 - 4, dadurch gekennzeichnet, dass die zweite Schnittstelle derart konfigurierbar ist, dass die Angebotsinformation wahlweise auf verschiedene Endgeräte übertragbar ist.

6. Vorrichtung nach einem der Ansprüche 1 - 5, dadurch gekennzeichnet, dass die erste Schnittstelle an ein Operator-Terminal angeschlossen ist, über das eine Bestellinformation aufgrund der manuellen Eingabe eines Operators einspeisbar ist.

7. Vorrichtung nach einem der Ansprüche 1 - 6, dadurch gekennzeichnet, dass über die zweite Schnittstelle die Angebotsinformation als SMS-Nachricht an ein Mobiltelefon des Benutzers übertragbar ist.

8. Vorrichtung nach einem der Ansprüche 1 - 7, dadurch gekennzeichnet, dass über die zweite Schnittstelle die Angebotsinformation auf das Internet-Konto des Benutzers übertragbar ist.

9. Vorrichtung nach einem der Ansprüche 1 - 8, dadurch gekennzeichnet, dass über die zweite Schnittstelle die Angebotsinformation als e-Mail an den Benutzer übertragbar ist.

10. Vorrichtung nach einem der Ansprüche 1 - 9, dadurch gekennzeichnet, dass die zweite Schnittstelle bidirektional derart ausgestaltet ist, dass seitens des Benutzers nach dem Empfang der Angebotsinformation eine Nachricht zur Angebotsannahme an die Versand-Datenbank übertragbar ist.

11. Vorrichtung nach einem der Ansprüche 1 - 10, dadurch gekennzeichnet, dass die Auswerteeinheit aufgrund der Bestellinformation die Benutzerkennung bestimmten Benutzerdaten und die Anfragekennung bestimmten Angebotsdaten zuordnet.

12. Vorrichtung nach Anspruch 11, dadurch gekennzeichnet, dass mit der Anfragekennung ein Kaufgegenstand identifizierbar ist, aufgrund dessen die Angebotsdaten des Kaufgegenstands in die Angebotsinformation geladen werden.

13. Vorrichtung nach Anspruch 11, dadurch gekennzeichnet, dass mit der Anfragekennung ein Lieferant identifizierbar ist, aufgrund dessen die Angebotsdaten in Form von Informationen über den Lieferanten in die Angebotsinformation geladen werden.

14. Vorrichtung nach Anspruch 11, dadurch gekennzeichnet, dass mit der Anfragekennung ein Wissensgebiet identifizierbar ist, aufgrund dessen die Angebotsdaten in Form von Informationen über das Wissensgebiet in die Angebotsinformation geladen werden.

15. Vorrichtung nach einem der Ansprüche 1 - 14, dadurch gekennzeichnet, dass übereinstimmende Anfragekennungen von der Angebots-Datenbank über einen bestimmten Zeitraum aufgesammelt werden, um einen Mengenrabatt zu erzielen.

16. Vorrichtung nach einem der Ansprüche 1 - 15, dadurch gekennzeichnet, dass die Anfragekennung eine Ortinformation umfasst, aufgrund dessen die Angebotsdaten gefiltert werden.

17. Verfahren zur computergestützten Bearbeitung von Bestellinformationen,
bei dem Angebotsdaten auf einer Versand-Datenbank gespeichert werden und/oder auf die Angebotsdaten über eine Kommunikationsverbindung übertragen werden, und bei dem Benutzerdaten auf der Versand-Datenbank gespeichert werden,
bei dem über eine erste Schnittstelle eine Bestellinformation in die Versand-Datenbank benutzerseitig eingespeist wird, wobei die Bestellinformation eine Benutzerkennung und eine Anfragekennung umfasst,
bei dem mittels einer Auswerteeinheit die Bestellinformation ausgewertet und eine Angebotsinformation bereitgestellt wird, wobei die Angebotsinformation in Abhängigkeit von der Anfragekennung auf der Grundlage der Angebotsdaten ermittelt wird, und
bei dem über eine zweite Schnittstelle die Angebotsinformation in Abhängigkeit von der Benutzerkennung an ein benutzerseitiges Endgerät übertragen wird.

18. Verfahren nach Anspruch 17, dadurch gekennzeichnet, dass zur Einspeisung der Bestellinformation über die erste Schnittstelle eine unidirektionale Verbindung vorgesehen ist.

19. Verfahren nach einem der Ansprüche 17 - 18, dadurch gekennzeichnet, dass über die erste Schnittstelle die Bestellinformation als SMS-Nachricht seitens des Benutzers eingespeist wird.

20. Verfahren nach einem der Ansprüche 17 - 19, dadurch gekennzeichnet, dass die erste Schnittstelle an einen Sprachcomputer angeschlossen ist, über den eine Bestellinformation aufgrund einer Spracheingabe des Benutzers eingespeist wird.

21. Verfahren nach einem der Ansprüche 17 - 20, dadurch gekennzeichnet, dass die zweite Schnittstelle derart konfigurierbar ist, dass die Angebotsinformation wahlweise auf verschiedene Endgeräte übertragbar ist.

22. Verfahren nach einem der Ansprüche 17 - 21, dadurch gekennzeichnet, dass die erste Schnittstelle an ein Operator-Terminal angeschlossen ist, über das eine Bestellinformation aufgrund der manuellen Eingabe eines Operators eingespeist wird.

23. Verfahren nach einem der Ansprüche 17 - 22, dadurch gekennzeichnet, dass über die zweite Schnittstelle die Angebotsinformation als SMS-Nachricht an ein Mobiltelefon des Benutzers übertragen wird.

24. Verfahren nach einem der Ansprüche 17 - 23, dadurch gekennzeichnet, dass über die zweite Schnittstelle die Angebotsinformation auf das Internet-Konto des Benutzers übertragen wird.

25. Verfahren nach einem der Ansprüche 17 - 24, dadurch gekennzeichnet, dass über die zweite Schnittstelle die Angebotsinformation als e-Mail an den Benutzer übertragen wird.

26. Verfahren nach einem der Ansprüche 17 - 25, dadurch gekennzeichnet, dass über die zweite Schnittstelle seitens des Benutzers nach dem Empfang der Angebotsinformation eine Nachricht zur Angebotsannahme an die Versand-Datenbank übertragen wird.

27. Verfahren nach einem der Ansprüche 17 - 26, dadurch gekennzeichnet, dass die Auswerteeinheit aufgrund der Bestellinformation die Benutzerkennung bestimmten Benutzerdaten und die Anfragekennung bestimmten Angebotsdaten zuordnet.

28. Verfahren nach Anspruch 27, dadurch gekennzeichnet, dass mit der Anfragekennung ein Kaufgegenstand identifiziert wird, aufgrund dessen die Angebotsdaten des Kaufgegenstands in die Angebotsinformation geladen werden.

29. Verfahren nach Anspruch 27, dadurch gekennzeichnet, dass mit der Anfragekennung ein Lieferant identifiziert wird, aufgrund dessen die Angebotsdaten in Form von Informationen über den Lieferanten in die Angebotsinformation geladen werden.

30. Verfahren nach Anspruch 27, dadurch gekennzeichnet, dass mit der Anfragekennung ein Wissensgebiet identifiziert wird, aufgrund dessen die Angebotsdaten in Form von Informationen über das Wissensgebiet in die Angebotsinformation geladen werden.

31. Verfahren nach einem der Ansprüche 17 - 30, dadurch gekennzeichnet, dass übereinstimmende Anfragekennungen von der Angebots-Datenbank über einen bestimmten Zeitraum aufgesammelt werden, um einen Mengenrabatt zu erzielen.

32. Verfahren nach einem der Ansprüche 17 - 31, dadurch gekennzeichnet, dass die Anfragekennung eine Ortinformation umfasst, aufgrund dessen die Angebotsdaten gefiltert werden.
